(19) Europäisches Patentamt
European Patent Office
Office européen des brevets

(11) **EP 3 605 922 B1**

(12) **EUROPEAN PATENT SPECIFICATION**

(45) Date of publication and mention
of the grant of the patent:
**22.03.2023 Bulletin 2023/12**

(21) Application number: **18771428.2**

(22) Date of filing: **05.02.2018**

(51) International Patent Classification (IPC):
**H04L 5/00** *(2006.01)*

(52) Cooperative Patent Classification (CPC):
**H04L 5/0048; H04L 5/0094; Y02D 30/70**

(86) International application number:
**PCT/CN2018/075318**

(87) International publication number:
**WO 2018/171347 (27.09.2018 Gazette 2018/39)**

(54) **METHOD AND DEVICE FOR PROCESSING DEMODULATION PILOT FREQUENCY AND STORAGE MEDIUM**

VERFAHREN UND VORRICHTUNG ZUR VERARBEITUNG EINER DEMODULATIONSPILOTFREQUENZ UND SPEICHERMEDIUM

PROCÉDÉ ET DISPOSITIF POUR TRAITER UNE FRÉQUENCE PILOTE DE DÉMODULATION, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2017 CN 201710182794**

(43) Date of publication of application:
**05.02.2020 Bulletin 2020/06**

(73) Proprietor: **ZTE Corporation**
**Shenzhen, Guangdong 518057 (CN)**

(72) Inventors:
• **ZHANG, Chenchen**
**Shenzhen**
**Guangdong 518057 (CN)**
• **BI, Feng**
**Shenzhen**
**Guangdong 518057 (CN)**
• **HAO, Peng**
**Shenzhen**
**Guangdong 518057 (CN)**

(74) Representative: **Aipex B.V.**
**P.O. Box 30223**
**3001 DE Rotterdam (NL)**

(56) References cited:
**WO-A1-2017/172857    CN-A- 101 764 627**

CN-A- 102 055 519    CN-A- 104 541 471

• ERICSSON: "Summary of e-mail discussions on downlink control signaling", 3GPP DRAFT; R1-1701036 SUMMARY OF E-MAIL DISC ON DL CTRL SIG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, WA, USA; 20170116 - 20170120 16 January 2017 (2017-01-16), XP051208551, Retrieved from the Internet: URL:http://www.3gpp.org/ftp/Meetings_3GPP_SYNC/RAN1/Docs/ [retrieved on 2017-01-16]
• NTT DOCOMO ET AL: "Monitoring of DL control channel for NR", 3GPP DRAFT; R1-1700620, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 10 January 2017 (2017-01-10), XP051203001, Retrieved from the Internet: URL:http://www.3gpp.org/ftp/tsg_ran/WG1_RL 1/TSGR1_AH/NR_AH_1701/Docs/ [retrieved on 2017-01-10]
• NOKIA et al.: "On the DL control channel DM-RS and transmission scheme for NR", 3GPP TSG RAN WG1#88, R1-1703310, 6 February 2017 (2017-02-06), XP051220462, Athens, Greece

• NTT DOCOMO: "Monitoring of DL control channel for NR", 3GPP TSG RAN WG1 AH_NR meeting R1-1700620, 10 January 2017 (2017-01-10), XP051203001, Spokane, USA

**Description**

**TECHNICAL FIELD**

The present invention relates to the field of mobile communications and, in particular, to a method and apparatus for processing a demodulation pilot and a storage medium.

**BACKGROUND**

With the development of wireless communication technologies and the increasing demand of users for communication, the 5th Generation (5G) mobile communication technology has become a trend of future network development in order to meet higher, faster and newer communication needs. High-frequency communications is one important communication means of the future 5G technology, and high-speed data communications can be provided by using the large bandwidth of the high-frequency communications, so as to meet a demand for a large data volume in 5G communications. High-frequency propagation has larger loss, and the coverage radius is relatively smaller under the same power, which determines that the coverage radius needs to be increased by using a beamforming technology in the networking of a high-frequency communication system. Then transmission based on the beamforming technology needs to be considered whether for traffic channels or for control channels.

In the discussion of the 5G downlink control channel at the 3rd Generation Partnership Project (3GPP) conference, the concept of a control resource set has been passed. The definition of the control resource set is mainly used for distinguishing from the full-bandwidth manner of sending a Physical Downlink Control Channel (PDCCH) in Long Term Evolution (LTE). The PDCCH will not be sent in the full-bandwidth manner in 5G any more, but be sent in a frequency domain subband range corresponding to the control resource set. For one user, a base station may configure multiple control resource sets for the user, and different control resource sets may carry different types of PDCCHs. A control resource set corresponds to several physical resource blocks (PRBs) in a frequency domain and corresponds to one or more orthogonal frequency division multiplexing (OFDM) symbols in a time domain, the number of OFDM symbols included in the time domain may be referred to as duration of the control resource set, corresponding PRBs in the frequency domain may be semi-statically configured, and the duration in the time domain may be semi-statically or dynamically configured.

In the LTE PDCCH, resource allocation elements of a downlink control channel, such as Candidate, Resource Element Groups (REGs) and Control Channel Elements (CCEs) are defined, where a REG is a basic resource allocation element of the downlink control channel, and for the downlink control channel, one Candidate corresponds to one or more CCEs, and one CCE includes 9 REGs. In the discussion of the 5G downlink control channel, the definitions of REG and CCE have also been passed. The REG is still the basic resource allocation element of the downlink control channel, but the definition of REG is different from that in LTE, the time domain of a REG corresponds to one OFDM symbol, and the frequency domain of a REG corresponds to 12 subcarriers, which is equivalent to the frequency domain range of one PRB.

In the LTE PDCCH, demodulation of the downlink control channel will be performed based on a Cell Reference Signal (CRS), while the CRS is not suitable any more for demodulating the downlink control channel due to the new feature of 5G downlink control channel. A Demodulation Reference Signal (DMRS) may be used for demodulating the downlink control channel, but based on the concept of the control resource set and the new definition of a REG, how to design the demodulation pilot sequence and the resource mapping method of a 5G downlink control channel is a problem which needs further research. A technical literature ERICSSON: "Summary of e-mail discussions on downlink control signaling", 3GPP DRAFT; R1-1701036 SUMMARY OF E-MAII, DISC ON DL CTRL SIG, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE, vol. RAN WG1, no. Spokane, WA, USA; 20170116-20170120 16 January 2017 (2017-01-16), XP051208551, discusses about downlink control signaling in 5G. A technical literature NTT DOCOMO ET AL: "Monitoring of DL control channel for NR", 3GPP DRAFT; R1-1700620, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE, vol. RAN WG1, no. Spokane, WA, USA; 20170116-20170120 10 January 2017 (2017-01-10), XP051203001, discusses about monitoring of DL control channel for NR.

**SUMMARY**

To solve the preceding technical problems, embodiments of the present invention provide a method and apparatus for processing a demodulation pilot and a storage medium. The invention is set out in the appended set of claims.

In the technical solutions provided in the embodiments of the present invention, the demodulation pilot sequence is generated at least based on the time domain range of the control resource set. The resource mapping is performed on the demodulation pilot at least based on the time-frequency resource configuration of both the control resource set and the subset of the control resource set, and the intercepted demodulation pilot sequence is sent based on the resource mapping result. With the technical solutions of the embodiments of the present invention, the problems of how to generate the demodulation pilot sequence of the downlink control channel and how to perform resource mapping of the demodulation pilot in the downlink control channel are solved.

## BRIEF DESCRIPTION OF DRAWINGS

The drawings generally illustrate various embodiments discussed herein by way of example and not by way of limitation.

FIG. 1 is a schematic flowchart of a method for processing a demodulation pilot according to an embodiment of the present invention;
FIG. 2 is a schematic diagram 1 illustrating frequency domains of control resource sets according to an embodiment of the present invention;
FIG. 3 is a schematic diagram 2 illustrating frequency domains of control resource sets according to an embodiment of the present invention;
FIG. 4 is a schematic diagram 1 of control resource set 1 according to an embodiment of the present invention;
FIG. 5 is a schematic diagram 1 showing the time-frequency resources after demodulation pilots are mapped according to an embodiment of the present invention;
FIG. 6 is a schematic diagram 2 of control resource set 1 according to an embodiment of the present invention;
FIG. 7 is a schematic diagram 2 showing the time-frequency resources after demodulation pilots are mapped according to an embodiment of the present invention;
FIG. 8 is a structural diagram of an apparatus for processing a demodulation pilot according to an embodiment of the present invention; and
FIG. 9 is a structural diagram illustrating hardware of an apparatus for processing a demodulation pilot according to an embodiment of the present invention.

## DETAILED DESCRIPTION

To provide a more detailed understanding of features and content of embodiments of the present invention, implementation of the embodiments of the present invention is described below in detail with reference to the drawings. The drawings are provided for reference only and are not intended to limit the embodiments of the present invention.

The embodiments of the present invention provide a method for processing a demodulation pilot. The method specifically includes two parts: the first part is about a generation method of a demodulation pilot sequence; and the second part is about a resource mapping method of a demodulation pilot. Through implementation of the technical solutions provided in the embodiments of the present invention, the problems of how to generate the demodulation pilot sequence of the downlink control channel and how to perform resource mapping of the demodulation pilot in the downlink control channel can be solved.

In the embodiments of the present invention, an independent demodulation pilot sequence may be generated for each control resource set, and a uniform demodulation pilot sequence may be generated for a plurality of control resource sets, where the plurality of control resource sets may be all or part of control resource sets configured by a base station for all users and may also be all or part of control resource sets configured by the base station for one user. Therefore, the correspondence between a demodulation pilot sequence and a control resource set may be one-to-one correspondence or one-to-many correspondence.

In the above solution, the length of the demodulation pilot sequence may be determined according to the following formula:

$$r(m) = \frac{1}{\sqrt{2}}\big(1 - 2 \cdot c(2m)\big) + j\frac{1}{\sqrt{2}}\big(1 - 2 \cdot c(2m+1)\big), \; m = 0, 1, \cdots, (d \cdot r) \cdot N_{RB}^{\max,DL} - 1.$$

$N_{RB}^{\max,DL}$ denotes the number of PRBs or the number of other frequency domain resource elements included in a system bandwidth of a carrier where a control channel is located or in a downlink system bandwidth or in a frequency domain range of the control resource set, d denotes the time domain range of the control resource set, and may be the specific number of symbols. The number of symbols may be the number of symbols included in the maximum duration of the control resource set, and may also be the number of symbols on a certain scheduling time unit in real time. The number of symbols in real time may be semi-statically changed and may also be dynamically changed.

r denotes the specific number of demodulation pilot REs in a REG including the demodulation pilot or in a unit resource block in a frequency domain.

The time-frequency resource corresponding to the control resource set is divided into one or more subsets, time-frequency resources of different subsets are orthogonal to each other. Each subset is comprised of one or more REGs, different subsets corresponding to different REGs.

The demodulation pilots are inserted in units of REGs. For each subset, it is necessary to determine which REGs in the subset are to be inserted with the demodulation pilots, and according to the rule, the demodulation pilots may be inserted into all REGs corresponding to the subset, or may be inserted into part of REGs. The rule is as follows.

(1) In condition that the subset corresponds to merely one symbol in a time domain and corresponds to a plurality of PRBs in a frequency domain, a demodulation pilot needs to be inserted into each REG in a time-frequency resource.
(2) In condition that the subset corresponds to a plurality of symbols in the time domain and corresponds to the plurality of PRBs in the frequency domain, the following two cases exist according to a resource mapping rule on the subset.

Case 1: In condition that time domain priority mapping is adopted as the resource mapping rule on the subset, demodulation pilots are inserted into all REGs corresponding to a first symbol of the subset. In this case, for a control channel corresponding to a certain user, mapping has to be started from a first symbol of a subset where the control channel is located.

Case 2: In condition that frequency domain priority mapping is adopted as the resource mapping rule on the subset, the demodulation pilot is inserted into each REG in a time-frequency resource of the subset.

After the REGs into which the demodulation pilots need to be inserted on each subset of a control resource set are determined according to the rule, a portion of the pilot sequence is intercepted from the pilot sequence corresponding to the control resource set and is mapped to the REGs. Specific mapping may be performed in two steps.

In the first step, a portion of the pilot sequence corresponding to PRBs in the frequency domain of a control resource set is intercepted from a complete pilot sequence corresponding to a system bandwidth to obtain a portion 1 of the sequence.

In the second step, a portion of a pilot sequence corresponding to the REGs into which the pilots are inserted of the control resource set is intercepted from the portion of the sequence 1 to obtain a portion 2 of the sequence.

In the above solution, the portion of the sequence 2 is the pilot sequence that is ultimately to be mapped onto the REGs into which the pilots need to be inserted.

The resource mapping rule of the subset may be determined according to the number of symbols included in the subset. In condition that the number of symbols included in the subset is an odd number, a rule of frequency domain priority mapping is adopted by default. In condition that the number of symbols included in the subset is an even number, a rule of time domain priority mapping or the rule of frequency domain priority mapping is adopted, or in condition that the base station notifies a terminal of time-frequency resource information of all or part of the subsets, the base station semi-statically or dynamically indicates which resource mapping rule is specifically adopted. In the above solution, a plurality of subsets belonging to the same control resource set may adopt the same resource mapping rule or adopt different resource mapping rules. The resource mapping rule may be mapping from candidate resource to CCE and/or mapping from CCE to REG.

The above solution takes the case where the demodulation pilot is inserted in units of REGs as an example, and of course, the demodulation pilot may also be inserted in units of resource blocks in the frequency domain. It should be understood by those skilled in the art that the unit resource block in the frequency domain is the same as the REG and insertion may be performed on the basis of the above solution.

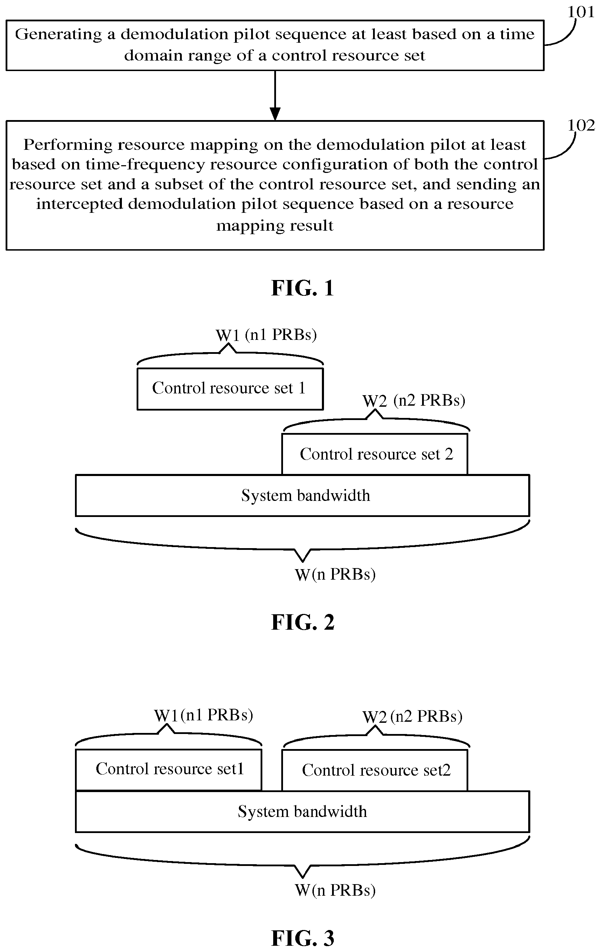

FIG. 1 is a schematic flowchart of a method for processing a demodulation pilot according to an embodiment of the present invention. As shown in FIG. 1, the method for processing a demodulation pilot includes the steps described below.

In step 101, a demodulation pilot sequence is generated at least based on a time domain range of a control resource set.

In the embodiment of the present invention, the time domain range of the control resource set refers to the number of OFDM symbols included in the control resource set, where the number of OFDM symbols included in the control resource set is semi-statically configured or dynamically configured. In the embodiment of the present invention, the time domain range of the control resource set refers to the number of OFDM symbols at most included in the control resource set in a time domain, where the number of OFDM symbols at most included in the control resource set in the time domain is one or more.

In the embodiment of the present invention, a length of the demodulation pilot sequence is determined by a

following formula:

$$r(m) = \frac{1}{\sqrt{2}}\big(1 - 2 \cdot c(2m)\big) + j\frac{1}{\sqrt{2}}\big(1 - 2 \cdot c(2m+1)\big), \ m = 0, 1, \cdots, (d \cdot r) \cdot N_{RB}^{\max,DL} - 1.$$

$N_{RB}^{\max,DL}$ denotes the number of PRBs or the number of frequency domain resource elements included in a system bandwidth of a carrier where a control channel is located or in a downlink system bandwidth or in a frequency domain range of the control resource set, d denotes a number of OFDM symbols comprised in the time domain range of the control resource set, r denotes a number of demodulation pilot resource elements, REs, comprised in a unit resource element group, REG, comprising the demodulation pilot or in a unit resource block in a frequency domain, and c and j are constants.

In the embodiment of the present invention, a base station configures one or more demodulation pilot sequences for a plurality of control resource sets.

In condition that the base station configures one demodulation pilot sequence for the plurality of control resource sets, it is indicated that the plurality of control resource sets share the one demodulation pilot sequence.

In condition that the base station configures a plurality of demodulation pilot sequences for the plurality of control resource sets, it is indicated that each of the plurality of control resource sets corresponds to a respective one of the plurality of demodulation pilot sequences.

In the embodiment of the present invention, the plurality of control resource sets refer to all or part of control resource sets configured by the base station for all users. The plurality of control resource sets refer to all or part of control resource sets configured by the base station for one user.

In step 102, resource mapping is performed on the demodulation pilot at least based on time-frequency resource configuration of both the control resource set and a subset of the control resource set, and an intercepted demodulation pilot sequence is sent based on a resource mapping result.

In the embodiment of the present invention, the subset of the control resource set is obtained in a following manner: dividing the control resource set into one or more subsets, time-frequency resources of different subsets are orthogonal to each other.

For each subset of the control resource set, a demodulation pilot corresponding to the each subset needs to be sent.

In the embodiment of the present invention, the control resource set is divided into one or more subsets through a dynamic manner or a semi-static manner.

In condition that the control resource set is divided into one or more subsets through the dynamic manner, a division policy is indicated in a common downlink control channel.

In condition that the control resource set is divided into one or more subsets through the semi-static manner, the division policy is indicated in one of: radio resource control (RRC) signaling, a system information block (SIB) message, or a master information block (MIB) message.

In the embodiment of the present invention, the step of performing the resource mapping on the demodulation pilot includes that: a base station inserts the demodulation pilot into all subsets included in the control resource set by using a REG or a unit resource block in a frequency domain as a demodulation pilot resource element.

In the embodiment of the present invention, the base station determines, according to following rules, REGs or unit resource blocks in the frequency domain on the subset and into which demodulation pilots need to be inserted.

In condition that the subset corresponds to merely one symbol in a time domain and corresponds to a plurality of PRBs in a frequency domain, the demodulation pilot is inserted into each REG in a time-frequency resource or each unit resource block in the frequency domain of the subset.

In condition that the subset corresponds to a plurality of symbols in the time domain and corresponds to the plurality of PRBs in the frequency domain, the demodulation pilot is inserted according to a resource mapping rule of the subset, which specifically includes what is described below.

In condition that time domain priority mapping is adopted as the resource mapping rule on the subset, demodulation pilots are inserted into all REGs corresponding to a first symbol of the subset or all unit resource blocks in the frequency domain, and for a control channel of a user, insertion is performed from a first symbol of a subset where the control channel is located.

In condition that frequency domain priority mapping is adopted as the resource mapping rule on the subset, the demodulation pilot is inserted into each REG in a time-frequency resource or each unit resource block in the frequency domain of the subset.

In the embodiment of the present invention, the resource mapping rule on the subset includes at least one of:

mapping from candidate resource to CCE or mapping from CCE to REG.

In the embodiment of the present invention, after the REGs or the unit resource blocks in the frequency domain on the subset and into which the demodulation pilots need to be inserted are determined, a portion of the demodulation pilot sequence is sent to all REGs or all unit resource blocks in the frequency domain of the control resource set and into which the demodulation pilots need to be inserted, and the portion of the demodulation pilot sequence is obtained by intercepting the generated demodulation pilot sequence.

In the embodiment of the present invention, the portion of the demodulation pilot sequence is obtained through a following manner: the base station intercepts, according to a PRB range corresponding to the control resource set, the portion of the demodulation pilot sequence corresponding to the PRB range from the generated demodulation pilot sequence.

In the embodiment of the present invention, the portion of the demodulation pilot sequence is obtained through a following manner: the base station divides the control resource set into a plurality of REGs; and intercepts a final demodulation pilot sequence from the portion of the pilot sequence corresponding to the control resource set according to time-frequency positions of the all REGs into which the demodulation pilots need to be inserted in the control resource set, where the final demodulation pilot sequence is a to-be-sent portion of the demodulation pilot sequence.

In the embodiment of the present invention, the resource mapping rule of the subset is determined according to the number of OFDM symbols included in the subset.

In the embodiment of the present invention, in condition that the number of OFDM symbols included in the subset is an odd number, the frequency domain priority mapping is adopted as the resource mapping rule of the subset by default. Here, the odd number is preferably 1.

In the embodiment of the present invention, in condition that the number of OFDM symbols included in the subset is an even number, the time domain priority mapping is adopted as the resource mapping rule of the subset by default; or when the base station notifies a terminal of time-frequency resource information of all or part of the subsets, the base station simultaneously notifies whether the time domain priority mapping or the frequency domain priority mapping is adopted as the resource mapping rule for each of the all or part of the subsets. Here, the odd number is preferably 2.

The technical solutions provided in the embodiments of the present invention will be further described below in detail in conjunction with specific application scenarios.

Example **1**:

A base station configures two control resource sets, i.e., control resource set 1 and control resource set 2, on a system bandwidth W (including n PRBs), where control resource set 1 corresponds to a frequency domain range W1 and includes n1 PRBs, and control resource set 2 corresponds to a frequency domain range W2 and includes n2 PRBs, as shown in FIG. 2.

For the time domain range of control resource set 1 and the time domain range of control resource set 2, a maximum of x OFDM symbols is specified, and x may be any value of 2, 3, and 4.

For the demodulation pilot, a REG is taken as a resource mapping element, and r demodulation pilot REs are included in one REG.

The base station generates a uniform demodulation pilot sequence for control resource set 1 and control resource set 2, which is specifically expressed as follows:

$$r(m) = \frac{1}{\sqrt{2}}\big(1 - 2 \cdot c(2m)\big) + j\frac{1}{\sqrt{2}}\big(1 - 2 \cdot c(2m+1)\big),\ m = 0, 1, \cdots, (x \cdot r) \cdot n - 1.$$

The sequence length *m* is equal to the product of the number *n* of PRBs included in the system bandwidth, the maximum time domain range x and the number r of pilot resource elements (REs) in a single REG.

The base station generates a complete demodulation pilot sequence *r(m)* according to an initial pilot sequence and the sequence generation manner. For a certain slot in which a downlink control channel needs to be sent, based on the complete sequence, the base station intercepts a portion *r1(m)* of the pilot sequence corresponding to control resource set 1 from *r(m)* according to the positions of n1 PRBs corresponding to the frequency domain range W1 among positions of n PRBs corresponding to the system bandwidth W, and the ratio of the length of *r1(m)* to the length of *r(m)* is n1/n.

Similarly, the base station intercepts a portion *r2(m)* of the pilot sequence corresponding to control resource set 2 from r(m) according to the positions of n2 PRBs corresponding to the frequency domain range W2 among positions of n PRBs corresponding to the system bandwidth W, and the ratio of the length of r2(m) to the length of *r(m)* is n2/n. Since overlapping PRBs exist between W1 and W2, part of sequence elements in *r1 (m)* and *r2 (m)* are the same.

Example **2:**

A base station configures two control resource sets, i.e., control resource set 1 and control resource set 2, on a system bandwidth W (including n PRBs), where control resource set 1 corresponds to a frequency domain range W1 and includes n1 PRBs, and control resource set 2 corresponds to a frequency domain range W2 and includes n2 PRBs, as shown in FIG. 3.

The system semi-statically configures the time domain ranges of control resource set 1 and control resource set 2 and notifies in RRC signaling, xl OFDM symbols are semi-statically configured for control resource set 1 and x2 OFDM symbols are semi-statically configured for control resource set 2.

For the demodulation pilot, a REG is taken as a resource mapping element, and r demodulation pilot REs are included in one REG.

The base station independently generates demodulation pilot sequences for control resource set 1 and control resource set 2 respectively. The demodulation pilot sequence generated for control resource set 1 is expressed as follows:

$$r(m) = \frac{1}{\sqrt{2}}\big(1 - 2 \cdot c(2m)\big) + j\frac{1}{\sqrt{2}}\big(1 - 2 \cdot c(2m + 1)\big), \ m = 0, 1, \cdots, (x1 \cdot r) \cdot n - 1.$$

The sequence length m is equal to the product of the number n of PRBs included in the system bandwidth, the semi-statically configured time domain range xl of control resource set 1, and the number r of pilot REs in a single REG.

The base station semi-statically generates a complete demodulation pilot sequence $r(m)$ for control resource set 1 according to an initial pilot sequence and the sequence generation manner. Based on the complete sequence, the base station intercepts a portion $r1(m)$ of the pilot sequence corresponding to control resource set 1 from $r(m)$ according to the positions of n1 PRBs corresponding to the frequency domain range W1 among positions of n PRBs corresponding to the system bandwidth W, and the ratio of the length of $r1(m)$ to the length of $r(m)$ is n1/n.

The demodulation pilot sequence generated by the base station for control resource set 2 is expressed as follows:

$$r(m) = \frac{1}{\sqrt{2}}\big(1 - 2 \cdot c(2m)\big) + j\frac{1}{\sqrt{2}}\big(1 - 2 \cdot c(2m + 1)\big), \ m = 0, 1, \cdots, (x2 \cdot r) \cdot n - 1.$$

The sequence length m is equal to the product of the number n of PRBs included in the system bandwidth, the semi-statically configured time domain range x2 of control resource set 2, and the number r of pilot REs in a single REG.

The base station semi-statically generates a complete demodulation pilot sequence $r(m)$ for control resource set 2 according to an initial pilot sequence and the sequence generation manner. Based on the complete sequence, the base station intercepts a portion $r2(m)$ of the pilot sequence corresponding to control resource set 2 from $r(m)$ according to the positions of n2 PRBs corresponding to the frequency domain range W2 among positions of n PRBs corresponding to the system bandwidth W, and the ratio of the length of $r2(m)$ to the length of $r(m)$ is n2/n.

Example **3:**

A base station configures two control resource sets, i.e., control resource set 1 and control resource set 2, on a system bandwidth W (including n PRBs), where control resource set 1 corresponds to a frequency domain range W1 and includes n1 PRBs, and control resource set 2 corresponds to a frequency domain range W2 and includes n2 PRBs.

The time domain of control resource set 1 is fixed to be 1 OFDM symbol in length. The time domain of control resource set 2 is x2 OFDM symbols in length which are dynamically or semi-statically configured. In condition that x2 is dynamically configured, a specific value of x2 is indicated in PDCCH signaling carried in control resource set 1, and in condition that x2 is a semi-statically configured, a specific value of x2 is indicated in RRC signaling. x2 is a value in the range of 1, 2, and 3.

The base station generates a uniform demodulation pilot sequence for control resource set 1 and control resource set 2, which is specifically as follows:

$$r(m) = \frac{1}{\sqrt{2}}\big(1 - 2 \cdot c(2m)\big) + j\frac{1}{\sqrt{2}}\big(1 - 2 \cdot c(2m + 1)\big), \ m = 0, 1, \cdots, (3 \cdot r) \cdot n - 1.$$

The sequence length m is equal to the product of the number n of PRBs included in the system bandwidth, the maximum time domain duration value 3 and the number r of pilot REs in a single REG.

The base station uniformly generates a complete demodulation pilot sequence r(m) for control resource set 1 and control resource set 2 according to an initial pilot sequence and the sequence generation manner.

For control resource set 1, the duration is fixed to 1 symbol in the time domain and nl PRBs corresponding to W1 exist in the frequency domain, so a portion of the pilot sequence which corresponds to the first symbol in the time domain and corresponds to W1 in the frequency domain is intercepted from the complete demodulation pilot sequence r(m), and the ratio of the length of rl(m) to the length of r(m) is nl/3n.

For control resource set 2, the duration in the time domain is semi-statically or dynamically changed. When control resource set 2 is needed for sending a certain slot of a downlink control channel, in condition that the semi-statically or dynamically configured duration in the time domain of control resource set 2 is x2 symbols (x2 is less than or equal to 3), the base station intercepts a portion r2(m) of the sequence which corresponds to the first x2 symbols in the time domain and corresponds to W2 in the frequency domain from the complete demodulation pilot sequence r(m), and the ratio of the length of r2(m) to the length of r(m) is (x2 x n2)/3n.

Example **four:**

Based on the method in Example 1, 2 or 3, for a certain control resource set, marked as control resource set 1, a base station obtains a portion r1(m) of the demodulation pilot sequence corresponding to the control resource set through sequence interception, and then needs to further determine specific resource mapping of the sequence r1(m).

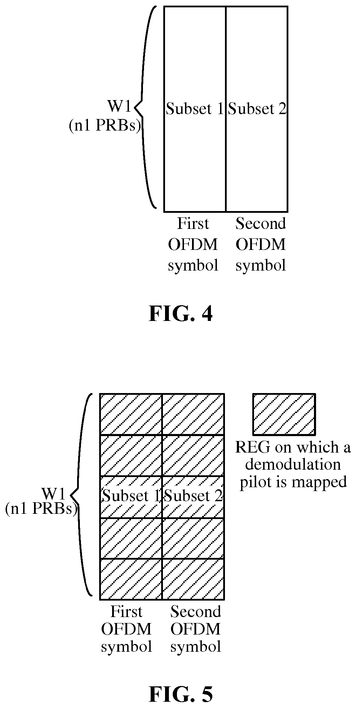

In a certain slot where downlink control signaling needs to be sent on control resource set 1, the base station divides control resource set 1 into two subsets, as shown in FIG. 4. Two subsets each include merely 1 OFDM symbol, so for both subset 1 and subset 2, demodulation pilots need to be mapped on all REGs included in the subset, and from the perspective of the entire control resource set 1, the demodulation pilot needs to be inserted into each REG, so that r1(m) does not need to be intercepted, and corresponding elements in the sequence r1(m) are mapped according to the time-frequency resource position of each REG. As shown in FIG. 5, the shaded portions are the time-frequency resources on which the demodulation pilots are mapped.

Example **5:**

Based on the method in Example 1, 2 or 3, for a certain control resource set, marked as control resource set 1, a base station obtains a portion r1(m) of the demodulation pilot sequence corresponding to the control resource set through sequence interception, and then needs to further determine specific resource mapping of the sequence r1(m).

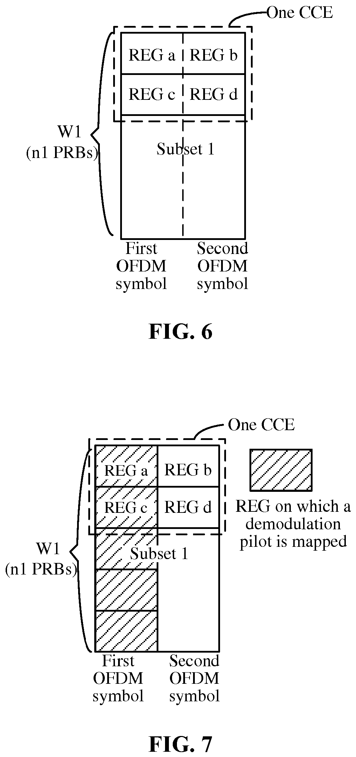

In a slot where downlink control signaling needs to be sent on the control resource set 1, the entire control resource set corresponds to merely one subset including 2 OFDM symbols, a rule of time domain priority mapping is adopted as for CCE mapping of the control resource set 1, and one CCE includes 4 REGs, as shown in FIG. 6. According to the demodulation pilot mapping rule, the demodulation pilot merely needs to be mapped on the REG of the first OFDM symbol, so the demodulation pilots need to be mapped on all REGs of the first OFDM symbol, a portion r1_1(m) of the sequence corresponding to these REGs are intercepted from the sequence r1(m), and elements in r1_1(m) are mapped to time-frequency resource positions of the corresponding REGs. As shown in FIG. 7, the shaded portions are time-frequency resources on which demodulation pilots are mapped.

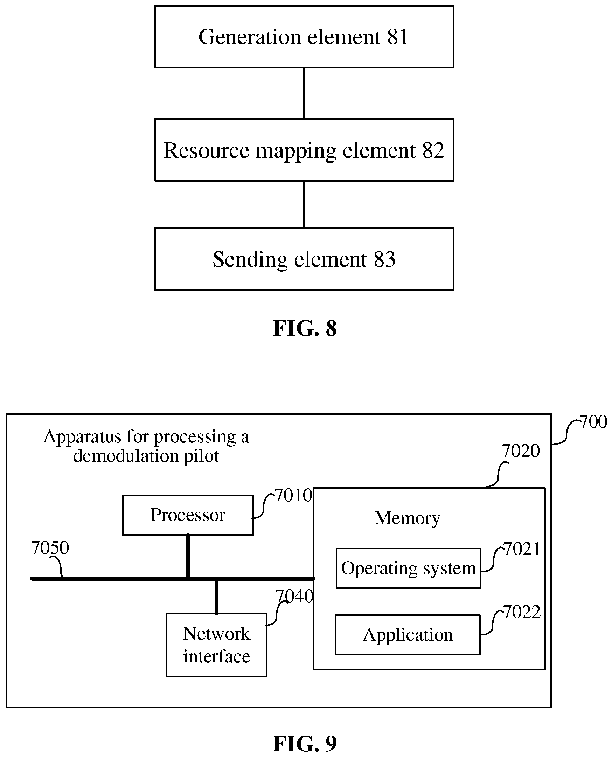

A structural diagram illustrating hardware of an apparatus for processing a demodulation pilot according to an embodiment of the present invention is shown in FIG. 9, and an apparatus 700 for processing a demodulation pilot includes: at least one processor 7010, a memory 7020, and at least one network interface 7040. The various components in the apparatus 700 for processing a demodulation pilot are coupled together through a bus system 7050. It may be understood that the bus system 7050 is configured to implement connection communications among these components. In addition to a data bus, the bus system 7050 further includes a power bus, a control bus and a state signal bus. However, for the sake of clarity, various buses are all marked as the bus system 7050 in FIG. 9.

It may be understood that the memory 7020 may be a volatile memory or a non-volatile memory, or may include both the volatile memory and the non-volatile memory. The non-volatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk or a compact disc read-only memory (CD-ROM). The magnetic surface memory may be a magnetic disk memory or a magnetic tape memory. The volatile memory may be a random access memory (RAM), which serves as an external cache. By way of an illustrative description rather than a limited description, many forms of RAMs may be used, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synchronous link dynamic random access memory (SLDRAM), and a direct rambus random access memory (DRRAM). The memory 7020 described in the embodiment of the present invention is intended to include, but is not limited to, these memories and any other suitable type of memory.

The memory 7020 in the embodiment of the present invention is configured to store various types of data to support and implement operations of the apparatus 700 for processing a demodulation pilot. Examples of such data include: any computer program for being operated on the apparatus 700 for processing a demodulation pilot, such as an operating system 7021 and an application 7022; contact data; phone book data; a message; a picture; a video; and the like. The operating system 7021 includes various system programs, such as a framework layer, a core library layer, a drive layer and the like, for implementing various basic services and processing hardware-based tasks. The application 7022 may include various applications, such as a media player, a browser, etc., for implementing various application services. Programs for implementing the methods in the embodiments of the present invention may be included in the application 7022.

The methods disclosed by the embodiments of the present invention may be applied to the processor 7010 or may be implemented by the processor 7010. The processor 7010 may be an integrated circuit chip with signal processing capabilities. In the implementation process, various steps of the methods described above may be performed by an integrated logic circuit of hardware or a software instruction in the processor 7010. The processor 7010 described above may be a general-purpose processor, a digital signal processor (DSP), or another programmable logic device, another discrete gate or transistor logic device, another discrete hardware component, or the like. The processor 7010 may implement or execute various methods, steps and logic block diagrams disclosed in the embodiments of the present invention. The general-purpose processor may be a microprocessor or any conventional processor. The steps of the methods disclosed in the embodiments of the present invention may be directly implemented by a hardware decoding processor, or may be implemented by a combination of hardware and software modules in the decoding processor. The software module may be located in a storage medium which is located in the memory 7020. The processor 7010 reads information in the memory 7020 and implements the steps of the methods described above in combination with hardware of the processor 7010.

In an exemplary embodiment, the apparatus 700 for processing a demodulation pilot may be implemented by one or more application specific integrated circuits (ASICs), DSPs, programmable logic devices (PLDs), complex programmable logic devices (CPLDs), field-programmable gate arrays (FPGAs), general-purpose processors, controllers, micro controller units (MCUs), microprocessors, or other electronic elements for executing the methods described above.

The embodiments of the present invention further provide a storage medium configured to store executable programs, where when the executable programs are executed by a processor, steps described below are implemented.

A demodulation pilot sequence is generated at least based on a time domain range of a control resource set.

Resource mapping is performed on the demodulation pilot at least based on time-frequency resource configuration of both the control resource set and a subset of the control resource set, and an intercepted demodulation pilot sequence is sent based on a resource mapping result.

In the embodiment of the present invention, the time domain range of the control resource set refers to the number of OFDM symbols included in the control resource set, where the number of OFDM symbols included in the control resource set is semi-statically configured or dynamically configured. In the embodiment of the present invention, the time domain range of the control resource set refers to the number of OFDM symbols that the control resource set is able to include at most in a time domain, where the number of OFDM symbols that the control resource set is able to include at most in the time domain is one or more.

In the embodiment of the present invention, the subset of the control resource set is by dividing the control resource set into one or more subsets, time-frequency resources of different subsets are orthogonal to each other.

For each subset of the control resource set, a demodulation pilot corresponding to the each subset needs to be sent.

In the embodiment of the present invention, when the computer programs are run by the processor, steps described below are performed.

The control resource set is divided into one or more subsets through a dynamic manner or a semi-static manner.

In condition that the control resource set is divided into one or more subsets through the dynamic manner, a division policy is indicated in a common downlink control channel.

In condition that the control resource set is divided into one or more subsets through the semi-static manner, the division policy is indicated in one of: RRC signaling, a SIB message, or a MIB message. In the embodiment of the present invention, a length of the demodulation pilot sequence is determined by a following formula:

$$r(m) = \frac{1}{\sqrt{2}}\big(1 - 2 \cdot c(2m)\big) + j\frac{1}{\sqrt{2}}\big(1 - 2 \cdot c(2m+1)\big), \ m = 0, 1, \cdots, (d \cdot r) \cdot N_{RB}^{\max,DL} - 1.$$

$N_{RB}^{\max,DL}$ denotes the number of PRBs or the number of frequency domain resource elements included in a system bandwidth of a carrier where a control channel is located or in a downlink system bandwidth or in a frequency domain range of the control resource set, d denotes a number of OFDM symbols comprised in the time domain range of the control resource set, r denotes a number of demodulation pilot resource elements, REs, comprised in a unit resource element group, REG, comprising the demodulation pilot or in a unit resource block in a frequency domain, and c and $j$ are constants.

In the embodiment of the present invention, a base station configures one or more demodulation pilot sequences for a plurality of control resource sets.

In condition that the base station configures one demodulation pilot sequence for the plurality of control resource sets, it is indicated that the plurality of control resource sets share the one demodulation pilot sequence.

In condition that the base station configures a plurality of demodulation pilot sequences for the plurality of control resource sets, it is indicated that each of the plurality of control resource sets corresponds to a respective one of the plurality of demodulation pilot sequences.

In the embodiment of the present invention, the plurality of control resource sets refer to all or part of control resource sets configured by the base station for all users.

In the embodiment of the present invention, the plurality of control resource sets refer to all or part of control resource sets configured by the base station for one user.

In the embodiment of the present invention, when the computer programs are run by the processor, a step described below is performed.

Demodulation pilots are inserted into all subsets included in the control resource set by using a REG or a unit resource block in a frequency domain as a demodulation pilot resource element.

In the embodiment of the present invention, when the computer programs are run by the processor, steps described below are performed.

In condition that the subset corresponds to merely one symbol in a time domain and corresponds to a plurality of PRBs in a frequency domain, the demodulation pilot is inserted into each REG in a time-frequency resource or each unit resource block in the frequency domain of the subset.

In condition that the subset corresponds to a plurality of symbols in the time domain and corresponds to the plurality of PRBs in the frequency domain, the demodulation pilot is inserted according to a resource mapping rule of the subset, which specifically includes what is described below.

In condition that time domain priority mapping is adopted as the resource mapping rule on the subset, demodulation pilots are inserted into all REGs corresponding to a first symbol of the subset or all unit resource blocks in the frequency domain, and for a control channel of a user, insertion is performed from a first symbol of a subset where the control channel is located.

In condition that frequency domain priority mapping is adopted as the resource mapping rule on the subset, the demodulation pilot is inserted into each REG in a time-frequency resource or each unit resource block in the frequency domain of the subset.

In the embodiment of the present invention, the resource mapping rule on the subset is at least one of: mapping from candidate resource to CCE or mapping from CCE to REG.

In the embodiment of the present invention, when the computer programs are run by the processor, a step described below is performed.

After the REGs or the unit resource blocks in the frequency domain on the subset and into which the demodulation pilots need to be inserted are determined, a portion of the demodulation pilot sequence is sent to all REGs or all unit resource blocks in the frequency domain of the control resource set and into which the demodulation pilots need to be inserted, and the portion of the demodulation pilot sequence is obtained by intercepting the generated demodulation pilot sequence. In the embodiment of the present invention, when the computer programs are run by the processor, a step described below is performed.

The portion of the demodulation pilot sequence corresponding to the PRB range is intercepted from the generated demodulation pilot sequence according to a PRB range corresponding to the control resource set.

In the embodiment of the present invention, when the computer programs are run by the processor, a step described below is performed.

The control resource set is divided into a plurality of REGs; and a final demodulation pilot sequence is intercepted from the portion of the pilot sequence corresponding to the control resource set according to time-frequency positions of the all REGs into which the demodulation pilots need to be inserted in the control resource set, where the final demodulation pilot sequence is a to-be-sent portion of the demodulation pilot sequence.

In the embodiment of the present invention, the resource mapping rule of the subset is determined according to the number of OFDM symbols included in the subset.

In the embodiment of the present invention, in condition that the number of OFDM symbols included in the subset is an odd number, the frequency domain priority mapping is adopted as the resource mapping rule of the subset by default.

In the embodiment of the present invention, in condition that the number of OFDM symbols included in the subset is an even number, the time domain priority mapping is adopted as the resource mapping rule of the subset by default; or when the base station notifies a terminal of time-frequency resource information of all or part of the subsets, the base station simultaneously notifies whether the time domain priority mapping or the frequency domain priority mapping is adopted as the resource mapping rule for each of the all or part of the subsets.

It should be understood by those skilled in the art that the embodiments of the present invention may be provided as methods, systems or computer program products. Therefore, the present invention may adopt a form of a hardware embodiment, a software embodiment or a combination of hardware and software embodiments. In addition, the present invention may adopt a form of a computer program product implemented on one or more computer-usable storage media (including, but not limited to, a disk memory, an optical memory and the like) which include computer-usable program codes.

The present invention is described with reference to flowcharts and/or block diagrams of methods, devices (systems) and computer program products according to the embodiments of the present invention. It is to be understood that computer program instructions may implement each flow and/or block in the flowcharts and/or block diagrams and a combination of flows and/or blocks in the flowcharts and/or block diagrams. These computer program instructions may be provided to a general-purpose computer, a special-purpose computer, an embedded processor or a processor of another programmable data processing device to produce a machine so that instructions executed by the computer or the processor of another programmable data processing device produce the apparatus for implementing functions designated in one or more flows in the flowcharts and/or one or more blocks in the block diagrams.

These computer program instructions may also be stored in a computer-readable memory which can cause the computer or another programmable data processing device to operate in a particular manner so that the instructions stored in the computer-readable memory produce a manufactured product including an instructing apparatus. The instructing apparatus implements the functions designated in the one or more flows in the flowcharts and/or the one or more blocks in the block diagrams.

These computer program instructions may also be loaded onto the computer or another programmable data processing device so that a series of operation steps are performed on the computer or another programmable device to produce processing implemented by the computer. Therefore, instructions executed on the computer or another programmable device provide steps for implementing the functions designated in the one or more flows in the flowcharts and/or the one or more blocks in the block diagrams.

The above are merely preferred embodiments of the present invention and are not intended to limit the scope of the present invention. The scope of protection of the invention is solely limited by the appended claims.

**INDUSTRIAL APPLICABILITY**

In the embodiments of the present invention, the demodulation pilot sequence is generated at least based on the time domain range of the control resource set. The resource mapping is performed on the demodulation pilot at least based on the time-frequency resource configuration of both the control resource set and the subset of the control resource set, and the intercepted demodulation pilot sequence is sent based on the resource mapping result. Thus, the problems of how to generate the demodulation pilot sequence of the downlink control channel and how to perform resource mapping of the demodulation pilot in the downlink control channel are solved.

**Claims**

1. A method for processing a demodulation pilot, comprising:

    generating (101) a demodulation pilot sequence at least based on a time domain range of a control resource set; and
    performing (102) resource mapping on the demodulation pilot at least based on time-frequency resource configuration of both the control resource set and a subset of the control resource set, and sending, by a base station, an intercepted demodulation pilot sequence based on a resource mapping result to a terminal;
    **characterized in that** the intercepted demodulation pilot sequence is obtained by intercepting a portion the demodulation pilot corresponding to the control resource set;
    wherein a length m of the demodulation pilot sequence is determined by a following formula:

$$r(m) = \frac{1}{\sqrt{2}}\big(1 - 2 \cdot c(2m)\big) + j\frac{1}{\sqrt{2}}\big(1 - 2 \cdot c(2m + 1)\big) \quad , \quad m = 0, 1, \cdots, (d \cdot r) \cdot$$

$$N_{RB}^{\max,DL} - 1,$$

wherein $N_{RB}^{\max,DL}$ denotes a number of physical resource blocks, PRBs, or a number of frequency domain resource elements comprised in a system bandwidth of a carrier where a control channel is located or in a downlink system bandwidth or in a frequency domain range of the control resource set, d denotes a number of orthogonal frequency division multiplexing, OFDM, symbols comprised in the time domain range of the control resource set, r denotes a number of demodulation pilot resource elements, REs, comprised in a unit resource element group, REG, comprising the demodulation pilot or in a unit resource block in a frequency domain, and c and j are constants;
wherein the performing the resource mapping on the demodulation pilot comprises:
inserting, by a base station, the demodulation pilot into all subsets comprised in the control resource set by using a REG or a unit resource block in a frequency domain as a demodulation pilot resource element;
wherein the method further includes determining by the base station according to following rules, REGs or unit resource blocks in the frequency domain on the subset and into which the demodulation pilot into all subsets need to be inserted:

in condition that the subset corresponds to only one symbol in a time domain and corresponds to a plurality of PRBs in a frequency domain, inserting the demodulation pilot into each of the REGs in a time-frequency resource or each of the unit resource blocks in the frequency domain of the subset; and
in condition that the subset corresponds to a plurality of symbols in the time domain and corresponds to the plurality of PRBs in the frequency domain, inserting the demodulation pilot according to a resource mapping rule of the subset comprises:

in condition that time domain priority mapping is adopted as the resource mapping rule on the subset, inserting demodulation pilot into all REGs corresponding to a first symbol of the subset or all unit resource blocks in the frequency domain, and
performing insertion, for a control channel of a user, from a first symbol of a subset where the control channel is located; and
in condition that frequency domain priority mapping is adopted as the resource mapping rule on the subset, inserting the demodulation pilot into each of the REGs in the time-frequency resource or each of the unit resource blocks in the frequency domain of the subset.

2. The method of claim 1, wherein the time domain range of the control resource set is a number of OFDM symbols comprised in the control resource set, wherein the number of OFDM symbols comprised in the control resource set is semi-statically configured or dynamically configured.

3. The method of claim 1, wherein the subset of the control resource set is obtained by dividing the control resource set into one or more subsets, wherein time-frequency resources of different subsets are orthogonal to each other; wherein for each of the one or more subsets of the control resource set, a demodulation pilot corresponding to the each of the one or more subsets needs to be sent.

4. The method of claim 1, wherein the resource mapping rule on the subset comprises at least one of: mapping from candidate resource to control channel element, CCE, or mapping from the CCE to the REG.

5. The method of claim 1, wherein after determining the REGs or the unit resource blocks in the frequency domain on the subset and into which the demodulation pilots need to be inserted, sending a portion of the demodulation pilot sequence to all REGs or all unit resource blocks in the frequency domain of the control resource set and into which the demodulation pilots need to be inserted, and wherein the portion of the demodulation pilot sequence is obtained by intercepting the generated demodulation pilot sequence.

6. The method of claim 5, wherein the portion of the demodulation pilot sequence is obtained through the following manner: intercepting, by the base station, according to a PRB range corresponding to the control resource set, the portion of the demodulation pilot sequence corresponding to the PRB range from the generated demodulation pilot sequence.

**7.** The method of claim 5, wherein the portion of the demodulation pilot sequence is obtained through the following manner: dividing, by the base station, the control resource set into a plurality of REGs; and intercepting a final demodulation pilot sequence from the portion of the pilot sequence corresponding to the control resource set according to time-frequency positions of the all REGs into which the demodulation pilots need to be inserted in the control resource set, wherein the final demodulation pilot sequence is a to-be-sent portion of the demodulation pilot sequence.

**8.** The method of claim 1, wherein the resource mapping rule of the subset is determined according to a number of OFDM symbols comprised in the subset.

**9.** The method of claim 1, wherein in condition that a number of OFDM symbols comprised in the subset is an odd number, the frequency domain priority mapping is adopted as the resource mapping rule of the subset by default.

**10.** The method of claim 1, wherein in condition that a number of OFDM symbols comprised in the subset is an even number, the time domain priority mapping is adopted as the resource mapping rule of the subset by default; or in condition that the base station notifies a terminal of time-frequency resource information of all or part of the one or more subsets, the base station simultaneously notifies whether the time domain priority mapping or the frequency domain priority mapping is adopted as the resource mapping rule for each of the all or part of the one or more subsets.

**11.** An apparatus for processing a demodulation pilot, comprising a processor and a memory storing instructions executable by the processor, wherein when the instructions are executed by the processor, the processor executes the method of any one of claims 1 to 10.

**12.** A storage medium, which is configured to store computer-executable instructions for executing the method for processing a demodulation pilot of any one of claims 1 to 10.

**Patentansprüche**

**1.** Verfahren zur Verarbeitung eines Demodulationspiloten, umfassend:

Generieren (101) einer Demodulationspilotsequenz, die mindestens auf einem Zeitdomänenbereich eines Steuerressourcensatzes basiert; und
Durchführen (102) von Ressourcenabbildung auf dem Demodulationspiloten, die mindestens auf einer Zeit-Frequenz-Ressourcenkonfiguration sowohl des Steuerressourcensatzes als auch eines Teilsatzes des Steuerressourcensatzes basiert, und
Senden einer abgefangenen Demodulationspilotsequenz basierend auf einem Ressourcenabbildungsergebnis zu einem Endgerät durch eine Basisstation;
**dadurch gekennzeichnet, dass** die abgefangene Demodulationspilotsequenz durch Abfangen eines Abschnitts des Demodulationspiloten, der dem Steuerressourcensatz entspricht, erhalten wird;
wobei eine Länge m der Demodulationspilotsequenz von einer folgenden Formel bestimmt wird:

$$r(m) = \frac{1}{\sqrt{2}}\big(1 - 2 \cdot c(2m)\big) + j\frac{1}{\sqrt{2}}\big(1 - 2 \cdot c(2m+1)\big), m = 0,1,\dots,(d \cdot r) \cdot N_{RB}^{\max,DL} - 1,,$$

wobei $N_{RB}^{\max,DL}$ eine Anzahl physischer Ressourcenblöcke, PRB (physical resource blocks, PRB), oder eine Anzahl von Frequenzdomänen-Ressourcenelementen bezeichnet, die in einer Systembandbreite eines Trägers umfasst sind, wo sich ein Steuerkanal befindet, oder in einer Downlink-Systembandbreite oder in einem Frequenzdomänenbereich des Steuerressourcensatzes, d eine Anzahl orthogonaler Frequenzmultiplex-Symbole, OFDM-Symbole (orthogonal frequency division multiplexing, OFDM), bezeichnet, die in dem Zeitdomänenbereich des Steuerressourcensatzes umfasst sind, r eine Anzahl von Demodulationspilot-Ressourcenelementen, RE (resource elements, RE), bezeichnet, die in einer Einheitsressourcenelementgruppe, REG (resource element group, REG), umfasst sind, die den Demodulationspiloten oder in einem Einheitsressourcenblock in einem Frequenzbereich umfasst, und c und j Konstanten sind;
wobei das Durchführen der Ressourcenabbildung auf dem Demodulationspiloten umfasst:

Einsetzen des Demodulationspiloten in alle Teilsätze, die in dem Steuerressourcensatz umfasst sind, unter Verwendung einer REG oder eines Einheitsressourcenblocks in einer Frequenzdomäne als ein Demodulationspilot-Ressourcenelement durch eine Basisstation;

wobei das Verfahren ferner das Bestimmen durch die Basisstation gemäß folgenden Regeln von REG oder Einheitsressourcenblöcken in der Frequenzdomäne auf dem Teilsatz und in welchen der Demodulationspilot in alle Teilsätze eingesetzt werden muss, beinhaltet:

unter der Bedingung, dass der Teilsatz nur einem Symbol in einer Zeitdomäne entspricht und einer Vielzahl von PRB in einer Frequenzdomäne entspricht, Einsetzen des Demodulationspiloten in jede der REG in einer Zeit-Frequenz-Ressource oder in jeden der Einheitsressourcenblöcke in der Frequenzdomäne des Teilsatzes; und

unter der Bedingung, dass der Teilsatz einer Vielzahl von Symbolen in der Zeitdomäne entspricht und der Vielzahl von PRB in der Frequenzdomäne entspricht, das Einsetzen des Demodulationspiloten gemäß einer Ressourcenabbildungsregel des Teilsatzes umfasst:

unter der Bedingung, dass Zeitdomänen-Prioritätsabbildung als die Ressourcenabbildungsregel auf dem Teilsatz übernommen wird, Einsetzen eines Demodulationspiloten in alle REG, die einem ersten Symbol des Teilsatzes oder aller EinheitsRessourcenblöcke in der Frequenzdomäne entsprechen, und Durchführen des Einsetzens für einen Steuerkanal eines Benutzers von einem ersten Symbol eines Teilsatzes, wo sich der Steuerkanal befindet; und

unter der Bedingung, dass Frequenzdomänen-Prioritätsabbildung als die Ressourcenabbildungsregel auf dem Teilsatz übernommen wird, Einsetzen des Demodulationspiloten in jede der REG in der Zeit-Frequenz-Ressource oder jeden der Einheitsressourcenblöcke in der Frequenzdomäne des Teilsatzes.

2.  Verfahren nach Anspruch 1, wobei der Zeitdomänenbereich des Steuerressourcensatzes eine Anzahl von OFDM-Symbolen ist, die in dem Steuerressourcensatz umfasst ist, wobei die Anzahl von OFDM-Symbolen, die in dem Steuerressourcensatz umfasst ist, halbstatisch konfiguriert oder dynamisch konfiguriert wird.

3.  Verfahren nach Anspruch 1, wobei der Teilsatz der Steuerressourcenmenge erhalten wird, indem die Steuerressourcenmenge in einen oder mehrere Teilsätze geteilt wird, wobei Zeit-Frequenz-Ressourcen unterschiedlicher Teilsätze zueinander orthogonal sind;

wobei für jeden des einen oder der mehreren Teilsätze des Steuerressourcensatzes ein Demodulationspilot, der jedem des einen oder der mehreren Teilsätze entspricht, gesendet werden muss.

4.  Verfahren nach Anspruch 1, wobei die Ressourcenabbildungsregel auf dem Teilsatz mindestens eines umfasst von: Abbildung von Kandidatenressource auf Steuerkanalelement, CCE (control channel element, CCE), oder Abbildung von CCE auf REG.

5.  Verfahren nach Anspruch 1, wobei nach dem Bestimmen der REG oder der Einheitsressourcenblöcke in der Frequenzdomäne auf dem Teilsatz und in die die Demodulationspiloten eingefügt werden müssen, ein Abschnitt der Demodulationspilotsequenz an alle REG oder alle Einheitressourcenblöcke in der Frequenzdomäne des Steuerressourcensatzes, und in die die Demodulationspiloten eingefügt werden müssen, gesendet wird, und wobei der Abschnitt der Demodulationspilotsequenz durch Abfangen der generierten Demodulationspilotsequenz erhalten wird.

6.  Verfahren nach Anspruch 5, wobei der Abschnitt der Demodulationspilotsequenz auf die folgende Weise erhalten wird: Abfangen durch die Basisstation gemäß einem PRB-Bereich, der dem Steuerressourcensatz entspricht, des Abschnitts der Demodulationspilotsequenz, der dem PRB-Bereich entspricht, von der generierten Demodulationspilotsequenz.

7.  Verfahren nach Anspruch 5, wobei der Abschnitt der Demodulationspilotsequenz auf folgende Weise erhalten wird: Teilen durch die Basisstation des Steuerressourcensatzes in eine Vielzahl von REG; und Abfangen einer endgültigen Demodulationspilotsequenz aus dem Abschnitt der Pilotsequenz, der dem Steuerressourcensatz entspricht, gemäß Zeit-Frequenz-Positionen aller REG, in die die Demodulationspiloten in den Steuerressourcensatz eingefügt werden müssen, wobei der endgültige Demodulationspilotsequenz ein zu sendender Abschnitt der Demodulationspilotsequenz ist.

8.  Verfahren nach Anspruch 1, wobei die Ressourcenabbildungsregel des Teilsatzes gemäß einer Anzahl von OFDM-Symbolen, die in dem Teilsatz umfasst sind, bestimmt wird.

9. Verfahren nach Anspruch 1, wobei unter der Bedingung, dass eine Anzahl von OFDM-Symbolen, die in dem Teilsatz umfasst ist, eine ungerade Zahl ist, die Frequenzdomänen-Prioritätsabbildung standardmäßig als die Ressourcenabbildungsregel des Teilsatzes übernommen wird.

10. Verfahren nach Anspruch 1, wobei unter der Bedingung, dass eine Anzahl von OFDM-Symbolen, die in dem Teilsatz umfasst ist, eine gerade Zahl ist, die Zeitdomänen-Prioritätsabbildung standardmäßig als die Ressourcenabbildungsregel des Teilsatzes übernommen wird; oder unter der Bedingung, dass die Basisstation einem Endgerät Zeit-Frequenz-Ressourceninformationen aller oder eines Teils des einen oder der mehreren Teilsätze mitteilt, die Basisstation gleichzeitig mitteilt, ob die Zeitdomänen-Prioritätsabbildung oder die Frequenzdomänen-Prioritätsabbildung als die Ressourcenabbildungsregel für alle oder einen Teil des einen oder der mehreren Teilsätze übernommen wird.

11. Gerät zur Verarbeitung eines Demodulationspiloten, die einen Prozessor und einen Speicher umfasst, der Anweisungen speichert, die von dem Prozessor ausführbar sind, wobei, wenn die Anweisungen von dem Prozessor ausgeführt werden, der Prozessor das Verfahren nach einem der Ansprüche 1 bis 10 ausführt.

12. Speichermedium, das dazu konfiguriert ist, computerausführbare Anweisungen zum Ausführen des Verfahrens zur Verarbeitung eines Demodulationspiloten nach einem der Ansprüche 1 bis 10 zu speichern.

## Revendications

1. Procédé de traitement d'un pilote de démodulation, comprenant :

la génération (101) d'une séquence pilote de démodulation au moins sur la base d'une plage de domaine temporel d'un ensemble de ressources de commande ; et
l'exécution (102) d'un mappage de ressources sur le pilote de démodulation au moins sur la base d'une configuration de ressources temps-fréquence à la fois de l'ensemble de ressources de commande et d'un sous-ensemble de l'ensemble de ressources de commande, et l'envoi, par une station de base, d'une séquence pilote de démodulation interceptée sur la base d'un résultat de mappage de ressources vers un terminal ;
**caractérisé en ce que** la séquence pilote de démodulation interceptée est obtenue en interceptant une partie du pilote de démodulation correspondant à l'ensemble de ressources de commande ;
dans lequel une longueur m de la séquence pilote de démodulation est déterminée par une formule suivante :

$$r(m) = \frac{1}{\sqrt{2}}\big(1 - 2 \cdot c(2m)\big) + j\frac{1}{\sqrt{2}}\big(1 - 2 \cdot c(2m + 1)\big), m = 0, 1, \cdots, (d \cdot r) \cdot N_{RB}^{\max,DL} - 1,$$

dans laquelle $N_{RB}^{\max,DL}$ désigne un certain nombre de blocs de ressources physiques, PRB, ou un certain nombre d'éléments de ressources de domaine fréquentiel compris dans une bande passante système d'un support où se trouve un canal de commande ou dans une bande passante système de liaison descendante ou dans une plage de domaine fréquentiel de l'ensemble de ressources de commande, d désigne un certain nombre de symboles de multiplexage par répartition orthogonale de la fréquence, OFDM, compris dans la plage de domaine temporel de l'ensemble de ressources de commande, r désigne un certain nombre d'éléments de ressources pilotes de démodulation, RE, compris dans un groupe d'éléments de ressources unitaires, REG, comprenant le pilote de démodulation ou dans un bloc de ressources unitaires dans un domaine fréquentiel, et c et j sont des constantes ;
dans lequel l'exécution du mappage de ressources sur le pilote de démodulation comprend :
l'insertion, par une station de base, du pilote de démodulation dans tous les sous-ensembles compris dans l'ensemble de ressources de commande en utilisant un REG ou un bloc de ressources unitaires dans un domaine fréquentiel comme élément de ressources pilotes de démodulation ;
dans lequel le procédé comporte en outre la détermination par la station de base selon les règles suivantes, des REG ou des blocs de ressources unitaires dans le domaine fréquentiel sur le sous-ensemble et dans lesquels le pilote de démodulation dans tous les sous-ensembles doit être inséré :

à condition que le sous-ensemble corresponde à un seul symbole dans un domaine temporel et corresponde à une pluralité de PRB dans un domaine fréquentiel, l'insertion du pilote de démodulation dans chacun des REG dans une ressource temps-fréquence ou chacun des blocs de ressources unitaires dans le domaine fréquentiel du sous-ensemble ; et

à condition que le sous-ensemble corresponde à une pluralité de symboles dans le domaine temporel et corresponde à la pluralité de PRB dans le domaine fréquentiel, l'insertion du pilote de démodulation selon une règle de mappage de ressources du sous-ensemble comprend :

à condition que le mappage de priorité de domaine temporel soit adopté comme règle de mappage de ressources sur le sous-ensemble, l'insertion d'un pilote de démodulation dans tous les REG correspondant à un premier symbole du sous-ensemble ou à tous les blocs de ressources unitaires dans le domaine fréquentiel, et l'exécution d'une insertion, pour un canal de commande d'un utilisateur, à partir d'un premier symbole d'un sous-ensemble où se trouve le canal de commande ; et

à condition que le mappage de priorité de domaine fréquentiel soit adopté comme règle de mappage de ressources sur le sous-ensemble, l'insertion du pilote de démodulation dans chacun des REG dans la ressource temps-fréquence ou chacun des blocs de ressources unitaires dans le domaine fréquentiel du sous-ensemble.

2. Procédé selon la revendication 1, dans lequel la plage de domaine temporel de l'ensemble de ressources de commande est un nombre de symboles OFDM compris dans l'ensemble de ressources de commande, dans lequel le nombre de symboles OFDM compris dans l'ensemble de ressources de commande est configuré de manière semi-statique ou configuré de manière dynamique.

3. Procédé selon la revendication 1, dans lequel le sous-ensemble de l'ensemble de ressources de commande est obtenu en divisant l'ensemble de ressources de commande en un ou plusieurs sous-ensembles, dans lequel les ressources temps-fréquence des différents sous-ensembles sont orthogonales entre elles ;
dans lequel pour chacun des un ou plusieurs sous-ensembles de l'ensemble de ressources de commande, un pilote de démodulation correspondant à chacun des un ou plusieurs sous-ensembles doit être envoyé.

4. Procédé selon la revendication 1, dans lequel la règle de mappage de ressources sur le sous-ensemble comprend au moins l'un parmi : le mappage de la ressource candidate à l'élément de canal de commande, CCE, ou le mappage du CCE au REG.

5. Procédé selon la revendication 1, dans lequel après avoir déterminé les REG ou les blocs de ressources unitaires dans le domaine fréquentiel sur le sous-ensemble et dans lesquels les pilotes de démodulation doivent être insérés, envoyer une partie de la séquence pilote de démodulation à tous les REG ou à tous les blocs de ressources unitaires dans le domaine fréquentiel de l'ensemble de ressources de commande et dans lesquels les pilotes de démodulation doivent être insérés, et dans lequel la partie de la séquence pilote de démodulation est obtenue en interceptant la séquence pilote de démodulation générée.

6. Procédé selon la revendication 5, dans lequel la partie de la séquence pilote de démodulation est obtenue de la manière suivante : l'interception, par la station de base, selon une plage PRB correspondant à l'ensemble de ressources de commande, de la partie de la séquence pilote de démodulation correspondant à la plage PRB à partir de la séquence pilote de démodulation générée.

7. Procédé selon la revendication 5, dans lequel la partie de la séquence pilote de démodulation est obtenue de la manière suivante : la division, par la station de base, de l'ensemble de ressources de commande en une pluralité de REG ; et l'interception d'une séquence pilote de démodulation finale à partir de la partie de la séquence pilote correspondant à l'ensemble de ressources de commande selon les positions temps-fréquence de tous les REG dans lesquels les pilotes de démodulation doivent être insérés dans l'ensemble de ressources de commande, dans lequel la séquence pilote de démodulation finale est une partie à envoyer de la séquence pilote de démodulation.

8. Procédé selon la revendication 1 dans lequel la règle de mappage de ressources du sous-ensemble est déterminée selon un nombre de symboles OFDM compris dans le sous-ensemble.

9. Procédé selon la revendication 1, dans lequel à condition qu'un nombre de symboles OFDM compris dans le sous-ensemble soit un nombre impair, le mappage de priorité de domaine fréquentiel est adopté comme règle de mappage de ressources du sous-ensemble par défaut.

10. Procédé selon la revendication 1, dans lequel à condition qu'un nombre de symboles OFDM compris dans le sous-ensemble soit un nombre pair, le mappage de priorité de domaine temporel est adopté comme règle de mappage de ressources du sous-ensemble par défaut ; ou à condition que la station de base notifie à un terminal des informations de ressources temps-fréquence de tout ou partie des un ou plusieurs sous-ensembles, la station de base notifie simultanément si le mappage de priorité de domaine temporel ou le mappage de priorité de domaine fréquentiel est adopté comme règle de mappage de ressources pour chacun de tout ou partie des un ou plusieurs sous-ensembles.

11. Appareil de traitement d'un pilote de démodulation, comprenant un processeur et une mémoire stockant des instructions exécutables par le processeur, dans lequel lorsque les instructions sont exécutées par le processeur, le processeur exécute le procédé selon l'une quelconque des revendications 1 à 10.

12. Support de stockage, qui est configuré pour stocker des instructions exécutables par ordinateur pour exécuter le procédé de traitement d'un pilote de démodulation selon l'une quelconque des revendications 1 à 10.

101

Generating a demodulation pilot sequence at least based on a time domain range of a control resource set

Performing resource mapping on the demodulation pilot at least based on time-frequency resource configuration of both the control resource set and a subset of the control resource set, and sending an intercepted demodulation pilot sequence based on a resource mapping result

102

**FIG. 1**

W1 (n1 PRBs)

Control resource set 1

W2 (n2 PRBs)

Control resource set 2

System bandwidth

W(n PRBs)

**FIG. 2**

W1(n1 PRBs)          W2(n2 PRBs)

Control resource set1          Control resource set2

System bandwidth

W(n PRBs)

**FIG. 3**

W1
(n1 PRBs)

Subset 1 | Subset 2

First | Second
OFDM | OFDM
symbol | symbol

**FIG. 4**

W1
(n1 PRBs)

Subset 1 | Subset 2

REG on which a
demodulation
pilot is mapped

First | Second
OFDM | OFDM
symbol | symbol

**FIG. 5**

**FIG. 6**

**FIG. 7**

Generation element 81

Resource mapping element 82

Sending element 83

**FIG. 8**

Apparatus for processing a
demodulation pilot

7020

700

Processor 7010

7050

Network
interface 7040

Memory

Operating system 7021

Application 7022

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ERICSSON.** Summary of e-mail discussions on downlink control signaling. *3GPP DRAFT; R1-1701036 SUMMARY OF E-MAII, DISC ON DL CTRL SIG, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE,* 16 January 2017, vol. RAN WG1

- **NTT DOCOMO et al.** Monitoring of DL control channel for NR. *3GPP DRAFT; R1-1700620, 3RD GENERATION PARTNERSHIP PROJECT (3GPP), MOBILE COMPETENCE CENTRE; 650, ROUTE DESLUCIOLES; F-06921 SOPHIA-ANTIPOLIS CEDEX; FRANCE,* 10 January 2017, vol. RAN WG1